# EUROPÄISCHE PATENTSCHRIFT

(11) **EP 4 289 600 B1**
(45) Veröffentlichungstag und Bekanntmachung des Hinweises auf die Patenterteilung: **18.02.2026**
(21) Anmeldenummer: 23177875.4
(22) Anmeldetag: 07.06.2023
(51) Int. Cl.: B29C 64/118, B29C 64/209, B29C 64/236, B29C 64/241, B29C 64/25, B29C 64/336, B33Y 30/00

(54) **VORRICHTUNG ZUR ADDITIVEN FERTIGUNG MIT EINEM FFF-VERFAHREN**
ADDITIVE MANUFACTURING APPARATUS USING FFF METHOD
DISPOSITIF DE FABRICATION ADDITIVE AVEC UN PROCÉDÉ FFF

(30) Priorität: 08.06.2022 DE 102022205807
(43) Veröffentlichungstag der Anmeldung: 13.12.2023
(73) Patentinhaber: Fraunhofer-Gesellschaft zur Förderung der angewandten Forschung e.V., 80686 München (DE)
(72) Erfinder: Ziervogel, Fabian, 09126 Chemnitz (DE)
(74) Vertreter: Pfenning, Meinig & Partner mbB

(56) Entgegenhaltungen:
- CN-U- 209 955 318
- US-B1- 10 254 499

## Beschreibung

Die Erfindung betrifft eine Vorrichtung zur additiven Fertigung mit einem FFF-Verfahren, mit der ein Polymerfilament gemeinsam mit einem Draht oder einer Faser in einer Vorschubbewegungsrichtung auf die Oberfläche eines Trägers oder eines bereits vorab abgelegten Polymerfilaments aufgedruckt bzw. abgelegt werden. Bei einem Träger kann es sich um eine sogenannte Bauplattform handeln auf der ein Bauteil oder ein Teil eines Bauteils mit dem FFF-Verfahren hergestellt werden kann.

Als Draht kann man metallische Drähte und als Faser kann man unterschiedliche Materialien, wie z.B. Glas-, Kohlenstoff-, Keramik- oder Textilfasern einsetzen.

Beispielhafte Anwendungsgebiete sind die automatisierte Integration von Kabelbäumen und Anbindung an Strukturbauteile, ein mechanischer Schutz durch Polymerummantelung (Automobile/Powertools), Aufdruck von Heizdrähten auf Foliensubstrate für das anschließende Prozessieren im Spritzguss, die Herstellung komplexer Consumer-Electronic innerhalb einer Maschine. Additive Fertigungsverfahren eignen sich besonders gut für die Herstellung komplexer Bauteile, die üblicherweise nur durch eine Vielzahl an Prozessschritten und Einzelteilen konventionell hergestellt werden können. Dabei kann ein sehr hoher Grad der Funktionsverdichtung erreicht werden. Aus diesem Grund werden auch verschiedenste Materialien im Prozess kombiniert. Für die Integration von Fremdmaterialien bietet sich besonders das Fused Filament Fabrication Verfahren(FFF) an. Dieses erfährt durch die Nutzung von kontinuierlichen Verstärkungsfasern aktuell ein starkes Wachstum. Es besteht über diese passiven Funktionen hinaus das Bestreben, solchen Bauteilen auch aktive oder sensorische Funktionen zu geben. Dies kann bislang nur in geringem Maße durch elektrisch leitende Polymere umgesetzt werden.

Sollen Funktionsfasern, wie Kohlefaser, Glasfaser oder metallische Einzeldrähte im Herstellungsprozess in ein Bauteil eingebettet werden. Dabei werden diese meistens orthogonal zum schichtweisen Aufbau, parallel zum Polymervorschub zugeführt. In den aufgeführten Methoden kann die jeweilige Funktionsfaser auf drei verschieden Arten vorliegen. So können ansonsten unbehandelte Fasern im Prozess in der Schmelzzone des jeweiligen Polymers in einer Extrusionsdüse imprägniert werden. Vorbehandelte Fasern können auch erwärmt und auf das Substratmaterial aufgepresst werden. Außerdem besteht die Möglichkeit Hybridfilamente einzusetzen. Dabei kann eine Koextrusion von Substratpolymer und Fasermaterial erfolgen.

Diese Methoden bedingen eine 90°-Umlenkung des polymeren Materials nach dem Düsenaustritt und stellen somit eine hohe mechanische Belastung dar. Besonders bei Fasern oberhalb von 0,3 mm Außendurchmesser führt dies zu einer starken Beeinträchtigung des Druckprozesses. Dies reduziert die Ablagegenauigkeit, die erreichbare Druckgeschwindigkeit und die Gestaltungsfreiheit.

Im Verfahrensansatz des Fibre Encapsulation Additive Manufacturing wird dieses Problem angegangen, indem der Draht- bzw. Faservorschub seitlich unter die Extrusionsdüse des Druckkopfs erfolgt. Dies führte zu einer erheblichen Verbesserung des Prozessverhaltens. Um komplexe Strukturen herzustellen ist dieser einseitige Vorschub nicht ausreichend. Aus diesem Grund wird in dem beschriebenen Ansatz das Werkstück entlang einer Rotationsachse gedreht. Im Hinblick auf große Werkstücke ist dies nicht immer möglich und mit Einbußen der Dynamik und der Genauigkeit verbunden. Der entwickelte Werkzeugkopf hat einen hohen Raumbedarf und erfordert ein besonderes Bewegungssystem für die Manipulation des Werkstücks mit seinem Träger. Insbesondere ist es problematisch größere Richtungswechsel bei der Vorschubbewegung vorzunehmen und dabei die Ausrichtung des Polymerfilaments mit der Ausrichtung der jeweiligen Faser bzw. eines Drahtes zu synchronisieren.

Es ist daher Aufgabe der Erfindung, Möglichkeiten anzugeben, mit denen ein Draht bzw. eine Faser mit einem Polymerfilament flexibel bei der additiven Fertigung eingesetzt und verarbeitet werden können, um faserverstärkte Bauteile und/oder Funktionselemente aufweisende Bauteile herstellen zu können, indem größere und schnellere Vorschubbewegungsrichtungswechsel in verbesserter Form berücksichtigt werden können und eine vorgegebene Ausrichtung von Polymerfilament und Draht bzw. Faser eingehalten werden kann, ohne dass während des Druckprozesses Beschädigungen am aufzudruckenden Material auftreten.

So ist aus US 10 254 499 B1 eine Vorrichtung zur additiven Fertigung von Bauteilen mit dielektrischen, elektrisch leitenden und magnetischen Materialien hergestellt werden können, bekannt.

CN 2 09 955 318 U betrifft eine Druckvorrichtung mit der ein FFF-Verfahren durchgeführt werden kann.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Bei der erfindungsgemäßen Vorrichtung werden ein Polymerfilament über eine erste Zuführung zu einer Düsenöffnung und ein Draht oder eine Faser von einer Zuführeinrichtung durch eine zweite Zuführung in den Austrittsbereich des Polymerfilaments aus der Düsenöffnung der ersten Zuführung gefördert. Die erste und die zweite Zuführung sind durch einen um mindestens 360 ° drehbaren Druckkopf, der mit einem Drehantrieb um die durch die mittlere Längsachse der ersten Zuführung vorgegebene Rotationsachse drehbar ist, geführt.

Die zweite Zuführung mündet mit ihrem Endbereich in den Bereich der Düsenöffnung in einem Winkel zwischen 45° und 90° in Bezug zur mittleren Längsachse der ersten Zuführung, in dem das Polymerfilament aus der Düsenöffnung austritt.

Die Förderung von Polymer zur Ausbildung des Polymerfilaments in und durch die erste Zuführung sowie die Förderung von Draht oder Faser in und durch die zweite Zuführung kann auf herkömmliche Art und Weise erreicht werden. So kann ein bereits vorgefertigtes Polymerfilament oder ein Extruder, mit dem Polymer in die und durch die erste Zuführung gefördert werden kann, eingesetzt werden. Ein Draht oder eine Faser kann von einer Rolle abgewickelt und in die zweite Zuführung bewegt werden.

Polymerfilament und Draht oder Faser können synchron durch eine entsprechende Drehung des Druckkopfes in eine bestimmte gewünschte Vorschubbewegungsrichtung ausgerichtet werden. Dabei kann der Druckkopf auch mehrmals in der gleichen Drehrichtung um seine Rotationsachse, die mit der mittleren Längsachse der ersten Führung zusammenfällt, gedreht werden. Es sind auch Drehrichtungswechsel ohne weiteres möglich.

Vorteilhaft kann in Vorschubbewegungsrichtung von Polymerfilament und Draht oder Faser im Anschluss an die Düsenöffnung eine Trenneinrichtung am Druckkopf angeordnet sein, mit der bei Bedarf ein Abtrennen von Polymerfilament und/oder Draht bzw. Faser möglich ist. Die Trenneinrichtung kann beispielsweise mindestens ein Schneidmesser aufweisen. Das Abtrennen kann durch eine geeignete Bewegung der Trenneinrichtung aber auch durch eine entsprechende Bewegung des Druckkopfes parallel oder in einem Winkel zur mittleren Längsachse der ersten Führung bzw. der Rotationsachse des Druckkopfes erreicht werden.

In Vorschubbewegungsrichtung des Polymerfilaments kann vor der Düsenöffnung eine elektrische Heizeinrichtung zur Erwärmung des Polymerfilaments, das innerhalb der ersten Zuführung im drehbaren Druckkopf während seiner Vorschubbewegung angeordnet ist, angeordnet sein.

Der Drehantrieb kann mit einem fest installierten Elektromotor und einem Getriebe gebildet sein, wobei das Getriebe am Druckkopf angreifen kann. Bevorzugt sind Riemengetriebe. Es kann auch ein Zahnriemen, der mit dem Elektromotor angetrieben wird, am Druckkopf angreifen, so dass dieser entsprechend gedreht werden kann.

Der Druckkopf sollte mit dem Drehantrieb mittels eines Manipulators in mindestens drei Freiheitsgraden bewegt werden können. Dabei kann es sich um die drei Achsen eines kartesischen Koordinatensystems handeln. Als Manipulator kann man einen entsprechend ausgebildeten Roboter nutzen, an dem der Druckkopf befestigt werden kann.

Der Endbereich der zweiten Zuführung kann auch gebogen ausgebildet sein, um den gewünschten Winkel, mit dem der Draht oder eine Faser in Richtung auf das geschmolzene Polymerfilament gerichtet wird, einhalten zu können und eine Beschädigung durch zu starkes Knicken vermieden werden kann.

Es kann auch eine dritte Zuführung für ein gasförmiges Kühlmedium, insbesondere komprimierte Luft durch den Druckkopf geführt sein, die gasförmiges Kühlmedium in Richtung auf das aus der Düsenöffnung austretende Polymerfilament zu dessen schnellerer Aushärtung richtet.

Mindestens eine Zuführeinrichtung oder ein Extruder für ein Polymerfilament und mindestens eine Zuführeinrichtung für einen Draht oder eine Faser sollen außerhalb des Druckkopfs nicht mit dem Druckkopf drehbar angeordnet sein.

Der Druckkopf kann in einem Gehäuse drehbar gelagert sein, wobei das Gehäuse mit dem Druckkopf mittels eines Manipulators mindestens dreidimensional bewegt werden kann.

Die Erfindung betrifft im Wesentlichen den Druckkopf. Das Bewegungssystem (Manipulator) und das zugehörige Wechselsystem für Druckköpfe kann eine kommerzielle Anlage sein.

Eine Schmelzkammer kann im Bereich der ersten Zuführung und der Heizeinrichtung angeordnet sein. Die erste und die zweite Zuführung sind im Druckkopf integriert. Alle benötigten Material-, Leistungs- und Signalzuflüsse sollten drehbar am Druckkopf bzw. dem Gehäuse drehbar gelagert sein. Insbesondere die Düsenöffnung der ersten Führung sollte im Mittelpunkt der Rotationsachse angeordnet sein. Das Polymerfilament ist in der Rotationsachse geführt, sodass eine endlose Rotation möglich ist. Das Rotationsvermögen hat Einfluss auf die erreichbaren Funktionalitäten und Geometrien mit denen Bauteile oder Teile von Bauteilen mit der erfindungsgemäßen Vorrichtung hergestellt werden können. So ist beispielsweise für die Herstellung von Spulenelementen für Aktoren oder Sensoren kann eine wiederholte Drehung in eine gleichbleibende Drehrichtung erforderlich sein, die mit der Erfindung erreicht werden kann. Eine uneingeschränkte Performance ist eigentlich nur durch eine uneingeschränkte Rotation gegeben.

Um den Druckkopf klein und leicht designen zu können, kann man den Vorschub des Polymerfilaments und des Drahtes bzw. der Faser vom Druckkopf entkoppeln. Dies ermöglicht hohe Vorschubbewegungsgeschwindigkeiten ohne Vibrationserscheinungen oder erhöhten Verschleiß mit verschiedensten Vorschubbewegungsrichtungen in denen Polymerfilament und Draht oder Faser gemeinsam bewegt werden können.

Die Zuführung des Drahtes oder der Faser kann in einem flachen Winkel in Bewegungsrichtung des Druckkopfs zu einem Überdrucken und Einkapseln genutzt werden. Das extrudierte und geschmolzene Polymerfilament kann den abgelegten Draht oder die Faser umfließen und fixiert ihn somit. Der Vorschub des Drahtes oder der Faser kann dabei der Vorschubbewegung (Fahrweg) des Druckkopfs entsprechen. Durch eine definierte Differenz der Fördergeschwindigkeiten von Polymerfilament und Draht bzw. Faser lassen sich auch bestimmte, insbesondere mechanische Eigenschaften an einem Bauteil beeinflussen. So kann man bei größerer Fördergeschwindigkeit des Polymerfilaments mit dem Draht bzw. der Faser nach dem Erstarren des Polymers Zugspannungen im Bauteil generieren.

Der Druckkopf kann so bewegt werden, dass die Förderlänge des Drahts oder der Faser kleiner ist als der vom Druckkopf zurückgelegte Weg bei seiner Vorschubbewegung mit dem Polymerfilament auf dem Träger oder dem Bauteil, so dass eine mechanische Spannung an dem Draht- oder Fasermaterial nach der Verfestigung bzw. dem Erstarren des Polymers des Polymerfilaments wirkt.

Durch die getrennte Medienführung von Polymer und Draht bzw. Faser und die Verbindung dieser außerhalb des Druckkopfes wird eine klare Trennung von umschlossenen und freiliegenden Draht- oder Faserabschnitten möglich.

Die Polymerextrusion kann auf Standardteilen beruhen. Es können gebräuchliche Polymerfilamentdurchmesser von 1,75 mm eingesetzt werden. Es können technische Thermoplaste bis zu einer Verarbeitungstemperatur von 500°C eingesetzt werden. Die Führungselemente für Drähte bzw. Fasern können austauschbar sein und erlauben die Verwendung von Außendurchmessern im Bereich von 0,1 mm -1,0 mm.

Dem Druckkopf können Zuführleitungen, insbesondere ein Filamentschlauch durch den Polymer zugeführt werden kann, ein Draht- oder Faserschlauch, ein Druckluftschlauch für Kühlmedium, eine elektrische Leistungsversorgung für ein Heizelement, einen 24V Lüfter und ein Signalkabel für einen Thermistor zur Regelung der Temperatur des Polymerfilaments bei dessen Schmelzen angeschlossen sein.

Diese Zuführleitungen würden bei wiederholter Rotation verdrillt und beschädigt oder behindern den Bewegungsablauf des Druckkopfs. Aus diesem Grund kann eine Zuführeinheit genutzt werden, die durch eine eigene Rotation die Spannung der Zuführleitungen zum Druckkopf auflöst. Die Zuführeinheit sollte an der Seite des Druckkopfes angeordnet sein, die der Seite gegenüberliegt an der die Düsenöffnung angeordnet ist.

Die Zuführeinheit kann aus einem äußeren Rahmen und einem Rotationskörper bestehen. Am Rotationskörper können unterschiedliche Funktionselemente fixiert sein. Zu diesen zählen beispielsweise ein Polymerextruder, eine Spule auf dem Polymerfilament aufgewickelt ist, elektrische Kontaktanschlüsse zur elektrischen bzw. elektronischen Anbindung des Rotationskörpers und Elementen des Druckkopfes an eine Systemsteuerung und zwei Vakuumpumpen. Die Vakuumpumpen können der Zuführung von Druckluft als Kühlmedium dienen. Die Übertragung der Signale an eine Systemsteuerung kann mittels Schleifring erfolgen. Dieser sollte mittig angeordnet sein und über eine Durchgangsbohrung verfügen, durch die Polymer für ein Polymerfilament oder ein vorbereitetes Polymerfilament in der Rotationsachse des Rotationskörpers und des Druckkopfes der ersten Zuführung zugeführt werden kann. Der Schleifring kann somit den statischen Rahmen mit dem beweglichen Rotationskörper verbinden. Die Lagerung kann über 45° geneigte Wälzlager erfolgen.

Die Poymerfilamentzuführung sollte aufgrund der Größe und des Gewichtes einer Polymerfilamentspule nicht mit auf dem Rotationskörper positioniert, sondern durch die Durchgangsbohrung des Schleifrings geführt sein, bevor Polymerfilament in die erste Zuführung eintritt. Somit kann dann am Rahmen die Befestigung des Polymerextruders, dem Motor für die Rotation und einem Tochterboard für die elektrische bzw. elektronische Ansteuerung des Druckkopfs und der Zuführeinheit erfolgen.

Die Zuführeinheit ist in Förderrichtung des Polymerfilaments und/oder eines Drahts oder einer Faser vor dem Druckkopf angeordnet. Erfindungsgemäß ist die Zuführeinheit mit einem Rahmen und einem Rotationskörper, der am sich nicht drehenden Rahmen drehbar gelagert ist, gebildet. Außerdem sind am Rotationskörper Funktionselemente fixiert und zu ihm Zuführleitungen geführt.

Die Zuführeinheit kann oberhalb des Arbeitsbereichs aufgehängt sein. Aufgrund der Länge der Kabel und Zuführschläuche kann eine freie Drehung des Druckkopfes, unabhängig von der Zuführeinheit um 180° in jede Drehrichtung ermöglicht werden. Dies erlaubt es, dass die agile Rotation des Drucckopfes sich der jeweiligen Vorschubbewegungsrichtung in größtmöglicher Geschwindigkeit anpasst und die Zuführeinheit die eingebrachten Spannungen auf die Zuführleitungen im Nachlauf während anderer Bewegungen abbauen kann.

Mit der Erfindung kann eine Integration von Draht oder Fasermaterialien im FFF Prozess, ohne hohe mechanische Beanspruchung des Drahts bzw. der Fasern (große Biegeradien) in ein additiv zu fertigendes Bauteil erreicht werden. Die Zuführung von Draht bzw. Faser und Polymerfilament kann unabhängig voneinander erfolgen (Kombination erst auf Bauteil). Die Vorrichtung kann in einem beliebigen Bewegungssystem (insbesondere in einer Anlage mit verschiedenen Druckköpfen) angewendet werden.

Es ist eine endlose Rotation für das Wickeln von elektrischen Spulen möglich, ohne dass spezielle Bewegungsabläufe eingehalten werden müssen. Außerdem ist eine Förderung von Draht bzw. Faser ohne gleichzeitige Polymerextrusion möglich (Offene Abschnitte für Kontaktierung; Wickeln von elektrischen Spulen mit hoher Dichte in einem Zuge). Es können hohe Vorschubbewegungsgeschwindigkeiten eine geringe Eigenmasse des Druckkopfes realisiert werden.

Durch die Unabhängigkeit der Rotationsachsen von Druckkopf und Zuführeinheit muss nicht jede Bewegung dieser Elemente synchron verlaufen, sondern nur dann, wenn Spannungsfälle erreicht werden, die eine Entlastung von Zuführleitungen erfordern. Die Erfindung ermöglicht auch die Anpassung der Düsenöffnungsgeometrie zur Formung der abgelegten Polymerbahnen (die runde Form der extrudierten Form kann einige Qualitätsprobleme hervorrufen), so dass auch mehreckige Polymerquerschnittsprofile abgelegt werden können.

Nachfolgend soll die Erfindung beispielhaft näher erläutert werden.

Dabei zeigen:
Figur 1 eine Schnittdarstellung eines Beispiels eines bei der Vorrichtung einsetzbaren Druckkopfes;
Figur 2 eine Schnittdarstellung des in Figur 1 gezeigten Beispiels in einer Ansicht von oben;
Figur 3 eine Darstellung einer Zuführeinheit, die gemeinsam mit einem Druckkopf eingesetzt werden kann und
Figur 4 eine weitere perspektivische Darstellung der in Figur 3 gezeigten Zuführeinheit.

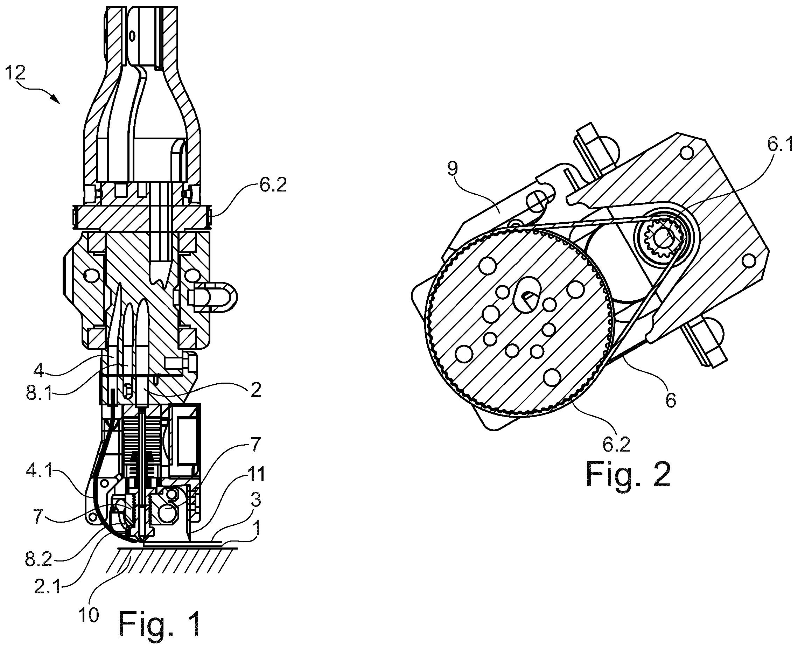

Figur 1 zeigt ein Beispiel eines Druckkopfes 5, der um eine Rotationsachse gedreht werden kann. Die Rotationsachse stimmt mit der mittleren Längsachse einer ersten Zuführung 2 überein durch die ein Polymerfilament 1 durch eine Düsenöffnung 2.1 in Richtung auf das jeweilige Bauteil 10 gefördert werden kann. Durch den Druckkopf 5 ist auch eine zweite Führung 4 geführt, durch die ein Draht 3 in Richtung Bauteil 10 gefördert werden kann. An der zweiten Führung 4 ist ein gebogener Endbereich 4.1 vorhanden, durch den der Draht 3 nahezu parallel zur Oberfläche des Bauteils 10 gefördert werden kann, so dass der Draht 3 bei seiner Förderung nur sehr geringfügig durch die zweite Führung 4 und dessen Endbereich 4.1 mechanisch beansprucht wird.

Der Draht 3 kann von einer Zuführeinrichtung, die außerhalb des Drucckopfes 5 und einer hier nicht gezeigten Zuführeinheit 12 angeordnet ist, in die zweite Führung 4 gefördert werden.

Am Druckkopf 5 ist außerdem eine Trenneinrichtung 11, hier eine Trennschneide, befestigt. An der das Polymerfilament 1 und/oder der Draht bei seiner/ihrer Vorschubbewegung vorbei bewegt werden. Mit der Trenneinrichtung 6 kann durch einen am Druckkopf 5 vorhandenen Mechanismus bzw. durch eine geeignete Bewegung des Druckkopfes 5 ein Abschneiden von Polymerfilament 1 und/oder Draht 3 erreicht werden.

Durch den Druckkopf 5 ist eine weitere dritte Zuführung mit einer Gasführung 8.1 für ein gasförmiges Kühlmedium, insbesondere Druckluft geführt. Das gasförmige Kühlmedium kann so aus einer Kühlungsdüse 8.2 in Richtung auf das aus der Düsenöffnung 2.1 austretende Polymerfilament 1 gerichtet werden, um das Aushärten bzw. Erstarren des Polymermaterials zu beschleunigen.

In Förderrichtung des Polymerfilaments 1 ist vor der Düsenöffnung 2.1 eine elektrische Heizeinrichtung 7 in den Druckkopf 5 integriert.

Der Druckkopf 5 ist in einem Gehäuse 9 drehbar gelagert und kann mit einem Drehantrieb 6 mit einem fest installierten Elektromotor 6.1 und einem Getriebe 6.2 gebildet ist, in Rotation versetzt werden. Das Getriebe 6.2 ist bei diesem Beispiel mit einem Zahnriemen gebildet, der vom Elektromotor 6.1 angetrieben werden kann. Dies kann man in der Darstellung von Figur 2 erkennen.

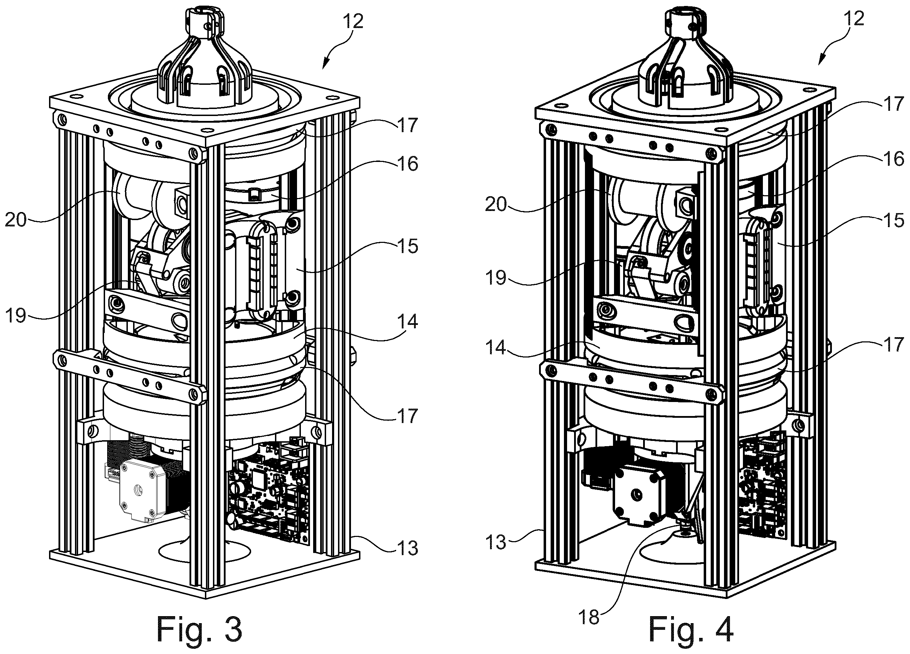

In Figur 3 ist eine Zuführeinheit 12 gezeigt, in der ein Rotationskörper 14 drehbar in einem Rahmen 13 gelagert ist. Die Lagerung kann mit zwei 45°-Wälzlagern 17 erreicht werden.

Am Rotationskörper 14 sind neben weiteren Funktionselementen hier eine beispielhaft gezeigte mindestens eine Vakuumpumpe 16, mit der Druckluft zur Kühlung des aus der Düsenöffnung 2.1 austretenden Polymers durch die dritte Zuführung durch die Gasführung 8.1 und die Kühlungsdüse 8.2 gefördert werden kann, und elektrische Kontaktelemente 15, die für eine Übertragung elektrischer Energie und von Messsignalen genutzt werden können, fixiert. Der Zuführeinheit 12 können zumindest Polymer für ein Polymerfilament, Draht 3 bzw. Fasern und elektrische Energie über hier nicht gezeigte Zuführleitungen zugeführt werden.

In Figur 4 kann man zusätzlich die Anordnung eines Polymerextruders 18 innerhalb des Rahmens 13, einer Fördereinrichtung 19 für Draht 3 sowie einer Drahtspule 20, auf der ein Draht 3 in aufgerollter Form vorgehalten und mittels der Fördereinrichtung in Richtung zweite Führung 4 abgewickelt werden kann, erkennen.

### Bezugszeichen

- 1: Polymerfilament
- 2: Erste Zuführung
- 2.1: Düsenöffnung
- 3: Draht oder Faser
- 4: Zweite Zuführung
- 4.1: Endbereich
- 5: Druckkopf
- 6: Drehantrieb
- 6.1: Elektromotor
- 6.2: Getriebe
- 7: Heizeinrichtung
- 8: Dritte Zuführung
- 8.1: Gasführung
- 8.2: Kühlungsdüse
- 9: Gehäuse
- 10: Bauteil
- 11: Trenneinrichtung
- 12: Zuführeinheit
- 13: Rahmen
- 14: Rotationskörper
- 15: Elektrische Kontaktelemente
- 16: Vakuumpumpe
- 17: Wälzlager
- 18: Polymerextruder
- 19: Fördereinrichtung für Draht
- 20: Drahtspule

## Patentansprüche

1. Vorrichtung zur additiven Fertigung mit einem FFF-Verfahren, mit der ein Polymerfilament (1) gemeinsam mit einem Draht oder einer Faser (3) in einer Vorschubbewegungsrichtung auf die Oberfläche eines Trägers oder eines bereits vorab abgelegten Polymerfilaments (1) aufgedruckt werden, bei der
ein Polymerfilament (1) über eine erste Zuführung (2) zu einer Düsenöffnung (2.1) und ein Draht oder eine Faser (3) von einer Zuführeinrichtung durch eine zweite Zuführung (4) in den Austrittsbereich des Polymerfilaments (1) aus der Düsenöffnung (2.1) förderbar sind wobei
die erste und die zweite Zuführung (2, 4) durch einen um mindestens 360 ° drehbaren Druckkopf (5), der mit einem Drehantrieb (6) um die durch die mittlere Längsachse der ersten Zuführung (2) vorgegebene Rotationsachse drehbar ist, geführt sind und
die zweite Zuführung (4) mit ihrem Endbereich (4.1) in den Bereich der Düsenöffnung (2.1) in einem Winkel zwischen 45° und 90° in Bezug zur mittleren Längsachse der ersten Zuführung (2) mündet, in dem das Polymerfilament (1) aus der Düsenöffnung (2.1) austritt, wobei
mindestens eine Zuführeinrichtung oder ein Extruder für ein Polymerfilament (1) und mindestens eine Zuführeinrichtung für einen Draht oder eine Faser (3) außerhalb des Druckkopfs (5) nicht mit dem Drucckopf (5) drehbar angeordnet sind und
dass in Förderrichtung des Polymerfilaments (1) und/oder des Drahts (3) oder der Faser vor dem Druckkopf (5) eine Zuführeinheit (12) angeordnet ist, die mit einem sich nicht drehenden Rahmen (13) und einem Rotationskörper (14), der am Rahmen (13) drehbar gelagert ist und an dem Funktionselemente fixiert und
zu dem Zuführleitungen geführt sind, gebildet ist.

2. Vorrichtung nach Anspruch 1, **dadurch gekennzeichnet, dass** in Vorschubbewegungsrichtung von Polymerfilament (1) und Draht oder Faser (3) im Anschluss an die Düsenöffnung (2.1) eine Trenneinrichtung (11) am Druckkopf (5) angeordnet ist.

3. Vorrichtung nach einem der vorhergehenden Ansprüche, **dadurch gekennzeichnet, dass** in Vorschubbewegungsrichtung des Polymerfilaments (1) vor der Düsenöffnung (2.1) eine elektrische Heizeinrichtung (7) zur Erwärmung des Polymerfilaments (1), das innerhalb der ersten Zuführung (2) im drehbaren Druckkopf (5) angeordnet ist, angeordnet ist.

4. Vorrichtung nach einem der vorhergehenden Ansprüche, **dadurch gekennzeichnet, dass** der Drehantrieb (6) mit einem fest installierten Elektromotor (6.1) und einem Getriebe (6.2) gebildet ist, wobei das Getriebe (6.2) am Druckkopf (5) angreift.

5. Vorrichtung nach einem der vorhergehenden Ansprüche, **dadurch gekennzeichnet, dass** der Druckkopf (5) mit dem Drehantrieb (6) mittels eines Manipulators in mindestens drei Freiheitsgraden bewegbar ist.

6. Vorrichtung nach einem der vorhergehenden Ansprüche, **dadurch gekennzeichnet, dass** der Endbereich (4.1) der zweiten Zuführung (4) gebogen ist.

7. Vorrichtung nach einem der vorhergehenden Ansprüche, **dadurch gekennzeichnet, dass** eine dritte Zuführung (8) für ein gasförmiges Kühlmedium durch den Druckkopf (5) geführt ist, die gasförmiges Kühlmedium in Richtung auf das aus der Düsenöffnung (2.1) austretende Polymerfilament (1) richtet.

8. Vorrichtung nach einem der vorhergehenden Ansprüche, **dadurch gekennzeichnet, dass** der Druckkopf (5) in einem Gehäuse (9) drehbar gelagert ist.

9. Vorrichtung nach einem der vorhergehenden Ansprüche, **dadurch gekennzeichnet, dass** der Druckkopf (5) so bewegbar ist, dass die Förderlänge des Drahts (3) oder der Faser kleiner ist als der vom Druckkopf (5) zurückgelegte Weg bei seiner Vorschubbewegung-mit dem Polymerfilament (1) auf dem Träger oder dem Bauteil (10), so dass eine mechanische Spannung an dem Draht- oder Fasermaterial nach der Verfestigung des Polymers des Polymerfilaments (1) wirkt.

## Claims

1. A device for additive manufacturing using an FFF method, with which a polymer filament (1) is printed together with a wire or a fibre (3) in a feed direction onto the surface of a carrier or a polymer filament (1) already laid down in advance, with which
a polymer filament (1) can be conveyed via a first feed (2) to a nozzle opening (2.1) and a wire or fibre (3) can be conveyed from a feed device through a second feed (4) into the exit region of the polymer filament (1) from the nozzle opening (2.1), wherein
the first and second feeds (2, 4) are guided by a print head (5) that is rotatable by at least 360° and which can be rotated by a rotary drive (6) around the axis of rotation defined by the central longitudinal axis of the first feed (2), and
wherein the second feed (4) opens with its end region (4.1) into the region of the nozzle opening (2.1) at an angle between 45° and 90° relative to the central longitudinal axis of the first feed (2), in which the polymer filament (1) exits from the nozzle opening (2.1), wherein
at least one feed device or extruder for a polymer filament (1) and at least one feed device for a wire or fibre (3) outside of the print head (5) are not positioned to rotate with the print head (5), and
that a feed unit (12) is positioned in the conveying direction of the polymer filament (1) and/or the wire (3) or the fibre in front of the print head (5) with a non-rotating frame (13) and a rotational body (14) that is rotatably mounted on the frame (13) and has functional elements affixed to it and
to which feed lines are connected.

2. The device according to claim 1, **characterised in that** a separation device (11) is positioned on the print head (5) in the feed direction of the polymer filament (1) and wire or fibre (3) after the nozzle opening (2.1).

3. The device according to any one of the preceding claims, **characterised in that** an electric heating device (7) for heating the polymer filament (1), which is arranged within the first feed (2) in the rotatable print head (5), is arranged in the feed direction of the polymer filament (1) in front of the nozzle opening (2.1).

4. The device according to any one of the preceding claims, **characterised in that** the rotary drive (6) is configured with a permanently installed electric motor (6.1) and a gear unit (6.2), wherein the gear unit (6.2) engages with the print head (5).

5. The device according to any one of the preceding claims, **characterised in that**, by means of a manipulator with the rotary drive (6), the print head (5) can be moved in at least three degrees of freedom.

6. The device according to any one of the preceding claims, **characterised in that** the end region (4.1) of the second feed (4) is bent.

7. The device according to any one of the preceding claims, **characterised in that** a third feed (8) for a gaseous cooling medium is guided through the print head (5), which directs the gaseous cooling medium towards the polymer filament (1) exiting from the nozzle opening (2.1).

8. The device according to any one of the preceding claims, **characterised in that** the print head (5) is rotatably mounted in a housing (9).

9. The device according to any one of the preceding claims, **characterised in that** the print head (5) is movable such that the conveying length of the wire (3) or fibre is smaller than the distance travelled by the print head (5) during its feed movement with the polymer filament (1) on the carrier or component (10), so that mechanical tension acts on the wire or fibre material after the polymer of the polymer filament (1) has solidified.

## Revendications

1. Dispositif de fabrication additive avec un procédé FFF, avec lequel un filament polymère (1) est imprimé conjointement avec un fil ou une fibre (3) dans une direction de mouvement d'avance sur la surface d'un support ou d'un filament polymère (1) déjà déposé au préalable, pour lequel
un filament polymère (1) peut être transporté par une première alimentation (2) vers une ouverture de buse (2.1) et un fil ou une fibre (3) provenant d'un dispositif d'alimentation peut être transporté(e) par une deuxième alimentation (4) dans la zone de sortie du filament polymère (1) de l'ouverture de buse (2.1) dans lequel
la première et la deuxième alimentation (2, 4) sont guidées par une tête d'impression (5) pouvant tourner d'au moins 360°, qui peut tourner avec un entraînement rotatif (6) autour de l'axe de rotation prédéfini par l'axe longitudinal central de la première alimentation (2) et
la deuxième alimentation (4) débouche avec sa zone d'extrémité (4.1) dans la zone de l'ouverture de buse (2.1) selon un angle compris entre 45° et 90° par rapport à l'axe longitudinal central de la première alimentation (2), dans laquelle le filament polymère (1) sort de l'ouverture de buse (2.1), dans lequel
au moins un dispositif d'alimentation ou une extrudeuse pour un filament polymère (1) et au moins un dispositif d'alimentation pour un fil ou une fibre (3) sont disposés à l'extérieur de la tête d'impression (5) sans pouvoir tourner avec la tête d'impression (5) et,
dans la direction de transport du filament polymère (1) et/ou du fil (3) ou de la fibre, une unité d'alimentation (12) est disposée en amont de la tête d'impression (5), qui est formée avec un cadre (13) non rotatif et un corps de rotation (14) qui est monté rotatif sur le cadre (13) et sur lequel sont fixés des éléments fonctionnels et
vers lequel sont guidées des conduites d'alimentation.

2. Dispositif selon la revendication 1, **caractérisé en ce qu'**un dispositif de séparation (11) est disposé sur la tête d'impression (5) dans le sens du mouvement d'avance du filament polymère (1) et du fil ou de la fibre (3) à la suite de l'ouverture de buse (2.1).

3. Dispositif selon l'une quelconque des revendications précédentes, **caractérisé en ce que**, dans le sens du mouvement d'avance du filament polymère (1), un dispositif de chauffage électrique (7) est disposé en amont de l'ouverture de buse (2.1) pour chauffer le filament polymère (1) qui est disposé à l'intérieur de la première alimentation (2) dans la tête d'impression (5) rotative.

4. Dispositif selon l'une quelconque des revendications précédentes, **caractérisé en ce que** l'entraînement rotatif (6) est formé avec un moteur électrique (6.1) installé de manière fixe et un engrenage (6.2), dans lequel l'engrenage (6.2) est en prise avec la tête d'impression (5).

5. Dispositif selon l'une quelconque des revendications précédentes, **caractérisé en ce que** la tête d'impression (5) peut être déplacée avec l'entraînement rotatif (6) au moyen d'un manipulateur selon au moins trois degrés de liberté.

6. Dispositif selon l'une quelconque des revendications précédentes, **caractérisé en ce que** la zone d'extrémité (4.1) de la deuxième alimentation (4) est courbée.

7. Dispositif selon l'une quelconque des revendications précédentes, **caractérisé en ce qu'**une troisième alimentation (8) pour un agent de refroidissement gazeux est guidée à travers la tête d'impression (5), qui dirige l'agent de refroidissement gazeux en direction du filament polymère (1) sortant de l'ouverture de buse (2.1).

8. Dispositif selon l'une quelconque des revendications précédentes, **caractérisé en ce que** la tête d'impression (5) est montée rotative dans un boîtier (9).

9. Dispositif selon l'une quelconque des revendications précédentes, **caractérisé en ce que** la tête d'impression (5) est mobile de telle sorte que la longueur du fil (3) ou de la fibre transportés est inférieure au chemin parcouru par la tête d'impression (5) lors de son mouvement d'avance avec le filament polymère (1) sur le support ou la pièce (10), de sorte qu'une tension mécanique agit sur le matériau de fil ou de fibre après la solidification du polymère du filament polymère (1).
